# EUROPÄISCHE PATENTSCHRIFT

(11) **EP 1 019 182 B1**
(45) Veröffentlichungstag und Bekanntmachung des Hinweises auf die Patenterteilung: **14.05.2003**
(21) Anmeldenummer: 98936599.4
(22) Anmeldetag: 31.07.1998
(51) Int. Cl.: B01J 2/00, B01F 5/22

(54) **VORRICHTUNG ZUM BESCHICHTEN UND/ODER UMMANTELN VON GRANULATFÖRMIGEN PARTIKELN MIT EINEM AUSHÄRTBAREN KLEBSTOFF**
DEVICE FOR COATING AND/OR SHEATHING GRANULAR PARTICLES WITH A SETTING ADHESIVE
DISPOSITIF POUR ENDUIRE ET/OU ENROBER DES PARTICULES GRANULAIRES AVEC UN ADHESIF DURCISSABLE

(30) Priorität: 31.07.1997 DE 19732931
(43) Veröffentlichungstag der Anmeldung: 19.07.2000
(73) Patentinhaber: Petrick, Frank, 5401 Baden (CH)
(72) Erfinder: Petrick, Frank, 5401 Baden (CH)
(74) Vertreter: Goy, Wolfgang, Dipl.-Phys.
(86) Internationale Anmeldenummer: IB9801244
(87) Internationale Veröffentlichungsnummer: WO99006141

(56) Entgegenhaltungen:
- EP-A- 0 195 352
- EP-A- 0 558 878
- EP-A- 0 665 274
- GB-A- 1 318 970
- US-A- 3 015 128
- US-A- 4 303 433
- US-A- 5 061 520
- US-A- 5 308 396

## Beschreibung

Die Erfindung betrifft eine Vorrichtung zum Beschichten und/oder Ummanteln von granulatförmigen Partikeln mit einem aushärtbaren Klebstoff nach dem Oberbegriff des Anspruchs 1.

Derartige mit einem Klebstoff beschichtete und/oder ummantelte, granulatförmige Partikel können als Halbzeug dazu verwendet werden, daraus Gegenstände zu formen. Die Grundidee mit diesen Partikeln besteht darin, sie in die gewünschte Form einzufüllen und anschließend so zu erwärmen, daß der Klebstoff erweicht oder leicht schmilzt und somit sich mit den Klebstoffbereichen benachbarter Partikel verbindet. Nach dem Aushärten sind dann die in der Form befindlichen Partikel miteinander verbunden. Statt die Partikel in eine Form einzufüllen, ist es auch denkbar, die Partikel auf einen Gegenstand in der Art einer Ummantelung aufzuspritzen.

Die zu beschichtenden und/oder zu ummantelnden Feststoffe mit einer Partikelgröße von 0,1 bis 7 mm bestehen aus einem metallischen und/oder keramischen Werkstoff und/oder einem Kunststoff und/oder einem biologischen Stoff, wobei dieser Feststoff eine Mohs-Härte von bis 9 und eine Beschichtung in einer plastisch-viskosen Form mit einer Verarbeitungsviskosität von 100 bis 8000 mPas bei Temperaturen von + 20°C bis + 250 °C aufweisen kann.

Beschichtungen von Flächen und/oder Formen werden größtenteils mittels bekannter Technologien wie Wirbelsintern, Pulver-Sprühsintern, Rotations-Sintem, Giessen, Spritzen, Einbrennen, Aufdampfen und/oder Zwangsvermischung ausgeführt.

Das Hauptanwendungsgebiet liegt im Beschichten von einzelnen Objekten, wobei das Handling mit einzelnen Feststoffen mit einer Partikelgröße von bis 7 mm Durchmesser zu 90% nur eine Zwangsvermischung zuläßt und/oder hohe Investitionen voraussetzt mit mehrheitlicher Einschränkung eines Chargenbetriebes. Das vereinzelte Beschichten von Partikelgrößen von 0,1 bis 7 mm mit viskosem Schmelzkleber ist im Online-Verfahren bisher noch nicht möglich.

Die US-A-3 015 128 zeigt eine Vorrichtung zum Beschichten eines Füllmaterials mit einem Medium der eingangs angegebenen Art. Zu diesem Zweck ist ein nach oben hin offener Kegelmantel vorgesehen. Um den Umfang dieses Kegelmantels herum befindet sich ein Behälter für eine Aushärtflüssigkeit. Zwischen dem Kegelmantel und diesem Behälter befindet sich eine Schwelle. Der Kegelmantel wird in eine Drehbewegung versetzt, so daß die zugeführten, zu beschichtenden Partikel langsam auf der Innenmantelfläche des Kegelmantels hochwandem und dabei mittels des Beschichtungsmaterials beschichtet werden, welches gleichermaßen dem Kegelmantel zugeführt wird. Die im Boden des Kegelmantels sich sammelnde Aushärtflüssigkeit wird in einem Behälter aufgefangen und mittels einer Pumpe wieder in den den Kegelmantel umgebenden Behälter hochgepumpt.

Die US-A-5 061 520 zeigt eine Vorrichtung zum Ummanteln von Partikeln. Hierzu ist ein nach oben hin offener Behälter vorgesehen, welcher im Bodenbereich eben und nach außen hin in zwei Stufen kegelstumpfförmig ist. Dieser Behälter ist in ein Flüssigkeitsbad eingetaucht, welches mittels einer Heiz- oder Kühleinrichtung geheizt oder gekühlt werden kann. Die zugehörigen Partikel wandern während der Drehbewegung des Behälters nach oben und werden dabei mittels des durch die Einrichtung zugeführten Beschichtungsmaterials ummantelt. Nach Passieren der Oberkante des Behälters werden die beschichteten Partikel abgeschleudert und in einem darunter befindlichen Behälter gesammelt. Während dieses freien Falls werden die Partikel mit Luft bestrahlt und so auf die gewünschte Temperatur gebracht.

Die US-A-4 303 433 zeigt eine Vorrichtung zum Erzeugen von Hohlkörpern. Diese Hohlkörper werden mittels einer Zentrifugaleinrichtung beim Austritt aus Düsen erzeugt. Sie prallen dabei auf einen Flüssigkeitsfilm, welcher mittels eines umlaufenden Rohres mit Düsen erzeugt wird.

Die EP-A-0 558 878 schließlich zeigt ein Verfahren sowie eine Vorrichtung zum Beschichten von Partikeln in Pulverform mit einem Material, beispielsweise Wachs. Hierfür ist ein Gehäuse mit einer konischen Oberfläche sowie ein Rotor in diesem Gehäuse ebenfalls mit einer konischen Oberfläche vorgesehen. Die zu beschichtenden Partikel werden einem Einlaß zugeführt, während das Beschichtungsmaterial (z.B. Wachs) über einen Einlaß von oben zugeführt wird. Offensichtlich vermischen sich diese beiden Komponenten in einem Ringkanal und werden aufgrund der Zentrifugalkraft zwischen den beiden konischen Flächen radial nach oben geführt, so daß auf diese Weise die Beschichtung der Partikel erfolgt. Dadurch ist es auch möglich, Granulate zu formen.

Der Erfindung liegt die **Aufgabe** zugrunde, eine Vorrichtung zum Beschichten und/oder Ummanteln von granulatförmigen Partikeln mit einem aushärtbaren Klebstoff zu schaffen.

Die technische **Lösung** der Erfindung ist gekennzeichnet durch die Merkmale im Kennzeichen des Anspruchs 1.

Die Grundidee der erfindungsgemäßen Beschichtungs- und/oder Ummantelungsvorrichtung von granulatförmigen und dabei vorzugsweise runden Partikeln besteht darin, daß die zu behandelnden Partikel über den heißen (und damit niedrigviskosen) Klebstoff bewegt werden und dabei durch den Kontakt zwischen den Partikeln und dem viskosen Klebstoff dieser Klebstoff an der Partikeloberfläche haften bleibt. Dadurch wird erreicht, daß Festkörper mit einer Partikelgröße von 0,1 bis 7 mm Durchmesser im endlosen, d.h. kontinuierlichen Betrieb mit einem viskosen Schmelzkleber beschichtet und/oder ummantelt werden und nach anschließender Vereinzelung weiterverarbeitet werden können, indem der Kegelmantel im Abschleuderbereich der Partikel glattwandig ist, dient die letzte Strecke des Trichters somit der Vereinzelung der beschichteten Partikel. Indem der Abschleuderbereich des Doppelkegelmantels für die Partikel gegen Luftzug abgeschirmt ist hat dies den Zweck, den Termikauftrieb von den Trichterenden des Außentrichters abzulenken. Dadurch wird eine zu schnelle Abkühlung des Klebers verhindert, was ansonsten dazu führen könnte, daß der Klebstoff Fäden zieht. Dieser "Windschutz" dient somit als Schutz für die austretenden Partikel. Durch den zusätzlichen Abkühlungsvorgang insbesondere mittels Luft und/oder Wasser wird das Aushärten des Klebstoffes beschleunigt, ohne daß die Gefahr besteht, daß die im Sammelbehälter aufgefangenen Partikel aneinander haften bleiben. Dadurch ist eine technisch einfache Möglichkeit zum Ummanteln von Partikeln mittels aushärtbarem Klebstoff geschaffen. Durch die permanente Rotationsbewegung des Trichters werden die zu beschichtenden Partikel aufgrund der Zentrifugalkraft radial nach außen bewegt und werden während dieses Bewegungsvorganges mit dem heißen Klebstoff beschichtet, welcher an der Innenmantelfläche des Trichters haftet. Durch die Erwärmung des Trichters erhalten die Beschichtungskomponenten des Klebstoffes die notwendige geringe Viskosität, um die Granulatpartikel sicher beschichten zu können. Dabei kann eine Aufheizung von bis zu 250° C vorgesehen sein, wobei die Wärmeenergie beispielsweise durch Infrarotstrahler erzeugt werden kann, welche in einem Abstand von 20 bis 100 mm zum Trichter montiert sind. Bei dem Kegelmantel, bei dem es sich um einen stumpfen Kegel handeln wird, ist eine Auffangvorrichtung mit einem Auffangring für die Partikel nachgeschaltet. Dieser bewirkt eine gezielte Zuführung der beschichteten Partikel zu einem entsprechenden Auffangbehälter. Als Prallring kann ein konischer Ring von 100 bis 400 mm Breite vorgesehen sein. Der Prallring wird mit einem Luftpolster und/oder Wasserfilm überzogen. Der homogene Wasserfilm zum Kühlen weist eine Wassertemperatur von 20 bis 50° C auf, wobei die Wassertemperatur über ein separates Kühlsystem und/oder durch eine laufende Frischwasserzufuhr aufrechterhalten wird. Auch können poröse Werkstoffe verwendet werden, durch die ein fluidisierendes Medium strömt, das an der Werkstoffoberfläche ein Auffangpolster erzeugt, welches eine mechanische Berührung mit den aus dem Trichter herausgeschleuderten Partikeln einschränkt. Soweit kann die Bildung eines Luftpolsters und/oder eines Wasserfilms durch den Einsatz von porösen Werkstoffen erreicht werden. Durch diese gezielte Abkühlung der beschichteten, herausgeschleuderten Partikel besteht nicht die Gefahr, daß die Partikel am Prallring kleben bleiben. Selbstverständlich ist der Beschichtungsvorrichtung eine entsprechende Einrichtung für die gleichmäßige, kontrollierte und regelbare Mengendosierung der Partikel sowie der Komponenten für den Klebstoff vorgeschaltet, wobei der Arbeitsdruck in den Zuleitungen 0,5 bis 4 bar beträgt. Dabei kann für die Aufbereitung und Förderung der flüssigen Komponenten des Klebstoffes bis zum Trichter eine separate pneumatische oder elektrische oder hydraulische Einrichtung und/oder ein Druckbehälter für eine kontinuierliche Materialzuführung vorgesehen sein. Die Feststoffkomponente kann aus einem Ein- und/oder Mehrkammersystem entnommen sein und wird über eine Mengendosierung nach dem Venturiprinzip zugeführt werden. Als fluidisierendes Fördermedium kann ein neutrales Gas verwendet werden, welches in einer separaten Kompressionsanlage unter Druck erzeugt wird. Der Trichter in Form eines stumpfen Kegels kann so konstruiert sein, daß ein homogenes Beschichten sowie ein kontinuierlicher Materialvorschub bei variablen Umdrehungen von 100 bis 450 U/min stattfindet. Der Trichter kann einen Öffnungsdurchmesser von 200 bis 1.200 mm und im Bereich des Stumpfes einen Durchmesser von mindestens 100 mm aufweisen. Die Rotationsgeschwindigkeit des Trichters wird in der Regel so eingestellt sein, daß die beschichteten Partikel nach 1 bis 5 sec vereinzelt über den Trichterrand hinausgeschleudert werden. Der Trichterwinkel beträgt vorzugsweise 30° bis 180°. Der doppelwandige Kegelmantel hat dabei vorzugsweise einen Zwischenabstand von 30 bis 50 mm. Der innere Trichter verhindert dabei, daß Partikel, welche insbesondere durch Schikanen eventuell nach innen abgetrieben werden, nicht nach unten fallen, sondern wieder an die Innenwand des äußeren Trichters geführt werden. Durch eine entsprechende Abstimmung von Umdrehungsgeschwindigkeit, Trichterwinkel sowie Trichterdurchmesser werden die beschichteten Partikel vereinzelt am äußeren Durchmesserrand des Trichters abgeschleudert.

Eine Weiterbildung der erfindungsgemäßen Vorrichtung schlägt gemäß Anspruch 2 vor, daß die beiden Zuführungen im Bereich der Kegelspitze münden. "Kegelspitze" bedeutet dabei der Stumpf-Bereich des Kegels. Dabei werden die zu beschichtenden Partikel sowie der Klebstoff von oben durch die Antriebsachse geleitet.

Eine weitere Weiterbildung schlägt gemäß Anspruch 3 vor, daß den Partikeln eine Vorheizeinrichtung zugeordnet ist. Dies unterstützt das Bestreben, die Viskosität der Beschichtungskomponenten während des Beschichtungsvorganges aufrechtzuerhalten.

Eine weitere Weiterbildung der erfindungsgemäßen Vorrichtung schlägt gemäß Anspruch 4 vor, daß sich unterhalb des Kegelmantels ein Auffangbecken für die beschichteten Partikel befindet. Dieses Sammel- und/oder Abkühlbecken ermöglicht das Auffangen der beschichteten Partikel in einer wirtschaftlich vertretbaren Form.

Eine weitere Weiterbildung schlägt gemäß Anspruch 5 vor, daß sich auf der Innenmantelfläche des Kegelmantels hindernisartige Schikanen befinden. Diese Schikanen sind vorzugsweise im oberen Drittel des Trichters angeordnet und haben die Funktion von mechanischen Partikelwendern. Hier werden die unrunden Partikel, gebrochene Mineralien, Quarzsande, Splitt etc. durch die Schikanen gewendet, um so eine Komplettbeschichtung zu erreichen. Die geometrischen Schikanen sind je nach Partikelform und Größe unterschiedlich geformt und ausgebildet.

Vorzugsweise sind die beiden Kegelmäntel gemäß Anspruch 6 im wesentlichen gleich beabstandet.

Als konkrete technische Realisierung der Abschirmung wird gemäß der Weiterbildung in Anspruch 7 schließlich vorgeschlagen, daß der innere Kegelmantel des Doppelkegelmantels höhenmäßig unterhalb des oberen Kegelmantels des Doppelkegelmantels endet. Dies bedeutet, daß der äußere Umfangsrand des Innenkegels als Abschrimung für den äußeren Umfangsrand des Außenkegels dient.

Ein Ausführungsbeispiel einer erfindungsgemäßen Vorrichtung zum Beschichten und/oder Ummanteln von granulatförmigen Partikeln mit einem aushärtbaren Klebstoff wird nachfolgend anhand der Zeichnung beschrieben. In dieser zeigt:
- Fig. 1: eine schematische Ansicht der Beschichtungsvorrichtung;
- Fig. 2: ein Detailausschnitt in Fig. 1.

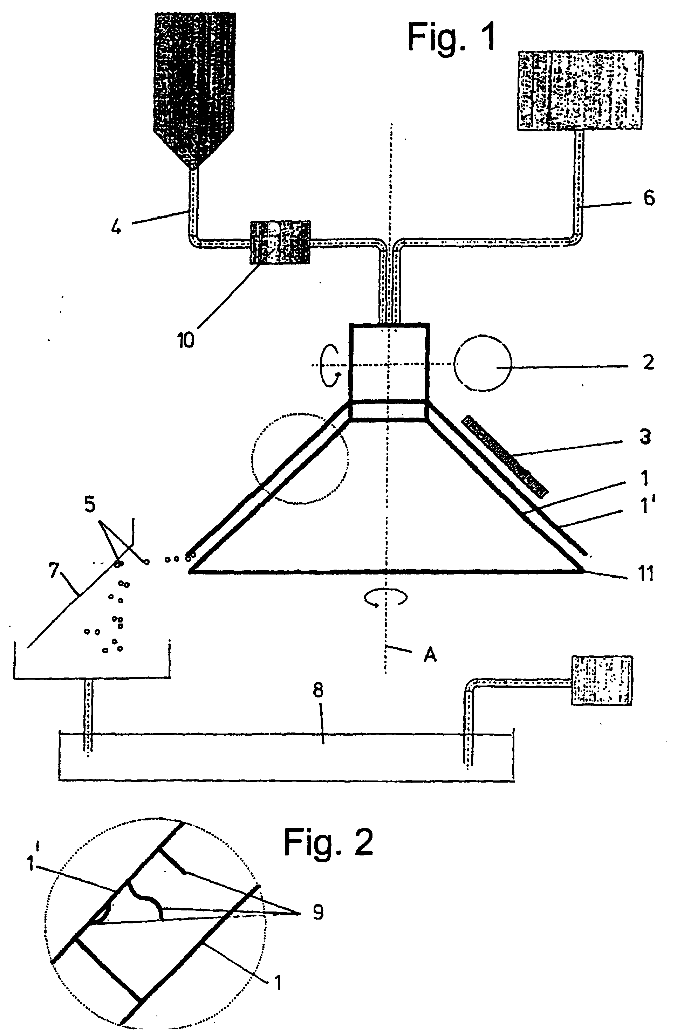

Die Beschichtungsvorrichtung weist einen um eine senkrechte Achse A drehbaren Doppelkegelmantel mit einem inneren Kegelmantel 1 und einem äußeren Kegelmantel 1' auf, welcher nach unten hin offen ist. Die beiden Kegelmäntel 1,1' definieren zwischen sich einen Zwischenabstand. Im oberen Drittel befinden sich Schikanen 9, wie in Fig. 2 angedeutet ist. Diese Schikanen 9 können unterschiedlich ausgebildet und geformt sein. Im Außenbereich des Kegelmantels 1' befindet sich eine Heizeinrichtung 3, beispielsweise eine Infrarotheizung. Um den Doppelkegelmantel 1, 1' in eine Drehbewegung zu versetzen, ist ein Antriebsmotor 2 vorgesehen.

Im Dachbereich des Doppelkegelmantels mündet eine Zuführung 4 für die zu beschichtenden Partikel 5 sowie eine Zuführung 6 für den Klebstoff. Beiden Komponenten (Partikel 5 und Klebstoff) ist jeweils ein Vorratsbehälter zugeordnet. In der Zuführung 4 für die Partikel 5 ist eine Vorheizeinrichtung 10 für die Partikel geschaltet.

Um den oberen Umfangsrand des Kegelmantels 1 herum befindet sich ein Prallring 7, welcher mit einem nicht dargestellten Wasser- oder Luftfilm oberflächenseitig versehen ist. Unterhalb des Prallrings 7 befindet sich ein Auffangbecken 8.

Die Funktionsweise der Beschichtungsvorrichtung ist wie folgt:

Mittels des Antriebsmotors 2 wird der Doppelkegelmantel 1, 1' in eine gleichmäßige Drehbewegung versetzt. Die Zuführungen 4, 6 für die Partikel 5 sowie für den Klebstoff münden im Antriebsbereich des Doppelkegelmantels 1,1 ' und werden in den Zwischenraum zwischen den beiden Kegelmänteln 1, 1' geleitet. Die im oberen Drittel des Doppelkegelmantels 1, 1' befindlichen Schikanen 9 bewirken ein Wenden von unrunden Partikeln. Die Partikel 5 werden aufgrund der Zentrifugalkraft zur unteren Austrittsöffnung des Doppelkegelmantels 1, 1' geleitet und dabei mit dem Klebstoff beschichtet, welcher die Innenmantelfläche des äußeren Kegelmantels 1' bedeckt. Sofern aufgrund der Schikanen 9 die Partikel 5 radial nach innen abgetrieben werden sollten, fallen sie nicht nach unten, sondern werden wieder durch den inneren Kegelmantel 1 an die Innenwand des äußeren Kegelmantels 1' geführt. Beim Verlassen des Zwischenraumes zwischen den beiden Kegelmänteln 1,1' werden die Partikel 5 abgeschleudert und prallen auf den Prallring 7 und von dort in das Auffangbecken 8.

In Fig. 1 ist erkennbar, daß der innere Kegelmantel 1 mit seinem äußerem Umfangsrand 11 bis unter den äußeren Umfangsrand des äußeren Kegelmantels 1' reicht. Dies bewirkt, daß der Thermikauftrieb von dem Trichterende des äußeren Kegelmantels 1' abgelenkt wird und so ein zu schnelles Abkühlen des Klebstoffes verhindert wird, was ansonsten dazu führen könnte, daß der Klebstoff Fäden zieht. Selbstverständlich kann der äußere Umfangsrand 11 des inneren Kegelmantels 1 auch andersartig geformt sein. Der Schutzring muß nur bewirken, daß keine hochsteigende Thermik an den Umfangsrand des äußeren Kegelmantels 1' gelangt.

### Bezugszeichenliste

- 1,1': Kegelmantel
- 2: Antriebsmotor
- 3: Heizeinrichtung
- 4: Zuführung
- 5: Partikel
- 6: Zuführung
- 7: Prallring
- 8: Auffangbecken
- 9: Schikane
- 10: Vorheizeinrichtung
- 11: Umfangsrand

- A: Achse

## Patentansprüche

1. Vorrichtung zum Beschichten und/oder Ummanteln von granulatförmigen Partikeln (5) mit einem aushärtbaren Klebstoff,
mit einem um die Längsmittelachse (A) drehbaren Kegelmantel (1,1'),
mit einer der Innenmantelfläche des Kegelmantels (1,1') zugeordneten Zuführung (4) für die zu behandelnden und/oder zu ummantelnden Partikel (5) sowie mit einer ebenfalls der Innenmantelfläche des Kegelmantels (1,1') zugeordneten Zuführung (6) für den viskosen Klebstoff sowie
mit einem um den Kegelmantel (1,1') herum im Abschleuderbereich der Partikel (5) angeordneten Prallring (7),
**dadurch gekennzeichnet,**
**daß** dem Kegelmantel (1,1') eine Heizeinrichtung (3) zugeordnet ist,
**daß** der Kegelmantel (1,1') nach unten hin offen ist,
**daß** der Kegelmantel (1,1') ein Doppelkegelmantel (1,1') mit Zwischenabstand ist, wobei sich im Zwischenbereich die zu beschichtenden Partikel (5) befinden,
**daß** der Abschleuderbereich des Doppelkegelmantels (1,1') für die Partikel (5) gegen Luftzug abgeschirmt ist,
**daß** der Kegelmantel (1,1') im Abschleuderbereich der Partikel (5) glattwandig ist und
**daß** der Prallring (7) mit einem Luftpolster und/oder einem Wasserfilm als Abkühlmittel überzogen wird.

2. Vorrichtung nach dem vorhergehenden Anspruch,
**dadurch gekennzeichnet,**
**daß** die beiden Zuführungen (4, 6) im Bereich der Kegelspitze münden.

3. Vorrichtung nach einem der vorhergehenden Ansprüche,
**dadurch gekennzeichnet,**
**daß** den Partikeln (5) eine Vorheizeinrichtung (10) zugeordnet ist.

4. Vorrichtung nach einem der vorhergehenden Ansprüche,
**dadurch gekennzeichnet,**
**daß** sich unterhalb des Kegelmantels (1,1') ein Auffangbecken (8) für die beschichteten Partikel (5) befindet.

5. Vorrichtung nach einem der vorhergehenden Ansprüche,
**dadurch gekennzeichnet,**
**daß** sich auf der Innenmantelfläche des Kegelmantels (1,1') hindernisartige Schikanen (9) befinden.

6. Vorrichtung nach einem der vorhergehenden Ansprüche,
**dadurch gekennzeichnet,**
**daß** die beiden Kegelmäntel (1,1') im wesentlichen gleich beabstandet sind.

7. Vorrichtung nach einem der vorhergehenden Ansprüche,
**dadurch gekennzeichnet,**
**daß** der innere Kegelmantel (1) des Doppelkegelmantels (1,1') höhenmäßig unterhalb des oberen Kegelmantels (1') des Doppelkegelmantels (1,1') endet.

## Claims

1. Device for coating and/or sheathing granular particles (5) with a curable adhesive, comprising a conical shell (1, 1') which can be rotated about the longitudinal central axis (A), comprising a guide (4) associated with the inner shell surface of the conical shell (1, 1') for the particles (5) to be treated and/or to be sheathed and comprising a guide (6) also associated with the inner shell surface of the conical shell (1, 1') for the viscous adhesive and comprising an impact ring (7) arranged around the conical shell (1, 1') in the centrifugation region of the particles (5), **characterised in that** a heating apparatus (3) is associated with the conical shell (1, 1'), **in that** the conical shell (1, 1') is open at the bottom, **in that** the conical shell (1, 1') is a double conical shell (1, 1') with an intermediate spacing, the particles (5) to be coated being located in the intermediate region, **in that** the centrifugation region of the double conical shell (1, 1') for the particles (5) is screened against draughts, **in that** the conical shell (1, 1') is smooth-walled and **in that** the impact ring (7) is covered with an air cushion and/or a water film as coolant.

2. Device according to the preceding claim, **characterised in that** the two guides (4, 6) open out in the region of the cone point.

3. Device according to either of the preceding claims, **characterised in that** a preheating apparatus (10) is associated with the particles (5).

4. Device according to any one of the preceding claims, **characterised in that** a collecting basin (8) for the coated particles (5) is located below the conical shell (1, 1').

5. Device according to any one of the preceding claims, **characterised in that** obstacle-like chicanes (9) are located on the inner shell surface of the conical shell (1, 1')

6. Device according to any one of the preceding claims, **characterised in that** the two conical shells (1, 1') are substantially equally spaced.

7. Device according to any one of the preceding claims, **characterised in that** the inner conical shell (1) of the double conical shell (1, 1') ends below the upper conical shell (1') of the double conical shell (1, 1') with respect to height.

## Revendications

1. Dispositif pour enduire et/ou enrober des particules granulaires (5) avec un adhésif durcissable, avec une enveloppe conique (1,1') mobile autour de l'axe médian longitudinal (A), avec une alimentation (4) associée à la surface d'enveloppe intérieure de l'enveloppe conique (1,1') pour les particules (5) à traiter et/ou à enrober ainsi qu'avec une alimentation (6) également associée à la surface d'enveloppe intérieure de l'enveloppe conique (1,1') pour l'adhésif visqueux ainsi qu'avec un anneau déflecteur (7) entourant l'enveloppe conique (1,1') disposé dans la zone de projection des particules (5), **caractérisé en ce qu'**un dispositif de chauffage (3) est associé à l'enveloppe conique (1,1'), **en ce que** l'enveloppe conique (1,1') est ouverte vers le bas, **en ce que** l'enveloppe conique (1,1') est une double enveloppe conique (1,1') avec un espace intermédiaire, les particules à enduire (5) se trouvant dans la zone intermédiaire, **en ce que** la zone de projection de la double enveloppe conique (1,1') pour les particules (5) est protégée contre le courant d'air, **en ce que** l'enveloppe conique (1,1') a des parois lisses dans la zone de projection des particules (5) et **en ce que** l'anneau déflecteur (7) est revêtu d'un matelas d'air et/ou d'une pellicule d'eau servant de moyen de refroidissement.

2. Dispositif selon la revendication précédente, **caractérisé en ce que** les deux alimentations (4, 6) débouchent dans la zone de la pointe du cône.

3. Dispositif selon l'une quelconque des revendications précédentes, **caractérisé en ce qu'**un dispositif de préchauffage (10) est associé aux particules (5).

4. Dispositif selon l'une quelconque des revendications précédentes, **caractérisé en ce que** sous l'enveloppe conique (1,1') se trouve un récipient de réception (8) pour les particules enduites (5).

5. Dispositif selon l'une quelconque des revendications précédentes, **caractérisé en ce que** des chicanes (9) servant d'obstacles se trouvent sur la surface d'enveloppe intérieure de l'enveloppe conique (1,1').

6. Dispositif selon l'une quelconque des revendications précédentes, **caractérisé en ce que** les deux enveloppes coniques (1,1') sont sensiblement équidistantes.

7. Dispositif selon l'une quelconque des revendications précédentes, **caractérisé en ce que** l'enveloppe conique intérieure (1) de la double enveloppe conique (1,1') se termine, en hauteur, en dessous de l'enveloppe conique supérieure (1') de la double enveloppe conique (1,1').
